# FASCICULE DE BREVET EUROPEEN

(11) **EP 1 311 181 B1**
(45) Date de publication et mention de la délivrance du brevet: **27.12.2006**
(21) Numéro de dépôt: 01963117.5
(22) Date de dépôt: 22.08.2001
(51) Int. Cl.: A47J 31/08, A47J 31/44

(54) **DISPOSITIF POUR LE DOSAGE DU CAFE**
VORRICHTUNG ZUR DOSIERUNG VON KAFFEE
COFFEE MEASURING DEVICE

(30) Priorité: 22.08.2000 FR 0010788
(43) Date de publication de la demande: 21.05.2003
(73) Titulaire: Eyrignoux, Claudine, 19100 Brive (FR)
(72) Inventeur: EYRIGNOUX, Claudine, F-19100 Brive (FR); EYRIGNOUX, Jean-Claude, F-19100 Brive (FR)
(86) Numéro de dépôt international: PCT/FR2001/002650
(87) Numéro de publication internationale: WO 2002/015759

(56) Documents cités:
- DE-A- 19 606 775
- DE-A- 19 836 067
- FR-A- 1 601 536
- FR-A- 2 307 502
- FR-A- 2 764 497
- US-A- 2 513 593
- US-A- 5 536 393
- US-A- 5 863 431

## Description

La présente invention concerne le dosage du café en poudre dans les cafetières à filtre en forme de tronc de cône, par déversement direct du paquet dans le filtre.

Traditionnellement le café est dosé en utilisant un doseur spécial (mesurette) ou bien une cuillère. Le café est puisé dans le paquet puis déversé dans le filtre de la cafetière en nombre de doses souhaitées. Par exemple dix doses pour douze tasses de café. Chaque opération nécessite de remplir la mesurette à l'intérieur du paquet, vérifier le niveau, déplacer la mesurette au-dessus de la cafetière et en déverser le contenu dans le filtre. Les paquets ayant une hauteur supérieure à celles des mesurettes, le consommateur doit donc plonger les doigts dans le paquet. La visibilité à l'intérieur du paquet qui est noir étant faible, il en résulte que par ce moyen de dosage archaïque le dosage est imprécis, long, fastidieux, générateur de salissures, de perte de café et d'arôme.

La présente invention permet de remédier de manière simple à au moins un de ces inconvénients et confère aux cafetières électriques un confort de chargement du café aussi rapide et précis que celui de l'eau.

L'invention a ainsi pour objet un dispositif de dosage du café en poudre dans une cafetière à filtre tronconique en papier ou en fibres synthétiques, caractérisé en ce qu'il comprend au moins une réglette qui comporte au moins un repère apte à doser une quantité de café lorsque ledit repère de la réglette est disposé à l'intérieur d'un volume délimité par une paroi périphérique du filtre, la réglette étant agencée le long de la paroi du filtre lors du dosage d'au moins une quantité de café.

Ainsi, l'invention permet de se libérer de toute contrainte en créant un nouvel organe de la cafetière destiné au repérage du niveau du café.

Selon cette invention, la réglette prend appui sur la paroi périphérique du filtre ou sur le réceptacle destiné à recevoir le filtre (par exemple un porte-filtre ou un panier porte-filtre), ce qui permet, pour certains modes de réalisation de l'invention, de simplement poser la réglette le long de la paroi du filtre.
- Cette configuration pour l'appui de la réglette permet à celle-ci d'être très simplement mise en oeuvre pour le dosage du café sans avoir à recourir à des modes de fixation compliqués qui nécessitent bien souvent de reconcevoir complètement la cafetière.

Cette invention répond au problème du dosage dans les cafetières existantes sans modification de celles-ci, ainsi que dans les nouvelles cafetières. Grâce à cette invention, le café est vidé de son paquet dans le filtre en quelques secondes, sans risque de perte ou de salissure, avec précision. Ceci fournit donne au consommateur un moyen de repérage constant et fiable des doses précises de café auxquelles il est habitué.

Ce moyen de repérage peut répondre à toutes les variétés de dosage suivant les traditions dans chaque pays. En effet, il suffit d'adapter les réglettes sans pour autant modifier les autres composants de la cafetière. Par ailleurs, les réglettes entièrement mobiles peuvent constituer un instrument de communication et de publicité entre les consommateurs et les agents économiques du café : producteurs, torréfacteurs, distributeurs fabricants de cafetières et de filtres.

La fabrication des réglettes est réalisable de manière industrielle dans des matériaux identiques à ceux des cafetières ou bien dans tout autre matériau répondant aux exigences alimentaires.

La fabrication et la commercialisation des réglettes mobiles peut être indépendante de celle des cafetières notamment pour le parc des cafetières existantes et relever de l'activité des accessoires ménagers.

Selon une caractéristique, à un repère de la réglette correspond au moins une graduation.

Ainsi, par exemple, la réglette peut ne comporter qu'un repère et comporter par ailleurs plusieurs graduations qui sont déportées par rapport au repère disposé à l'intérieur du volume du filtre.

Par ailleurs, on peut également envisager de disposer de plusieurs repères correspondant chacun à une graduation, et qui sont disposés à l'intérieur du volume du filtre.

Selon d'autres caractéristiques :
- les graduations sont agencées suivant plusieurs échelles de dosage,
- les graduations sont agencées sur deux faces opposées de la réglette,
- les graduations sont réalisées sous la forme de découpes dans le matériau constituant la réglette,
- la réglette est ajourée de manière à faire apparaître par contraste les graduations en matériau plein,
- les graduations sont agencées en quinconce sur une face de la réglette.

Selon une caractéristique, la ou les graduations sont agencées dans le volume délimité par la paroi du filtre lors du dosage.

Alternativement, on peut également envisager de déporter les graduations au moins en partie à l'extérieur du volume délimité par la paroi du filtre lors du dosage.

Ceci permet par exemple de faciliter la lecture des graduations de la réglette.

Cependant, on notera que lorsque la réglette est agencée à l'intérieur du volume du filtre et dans sa configuration d'appui sur ledit filtre ou sur le réceptacle qui le contient, la lisibilité des graduations se trouvant sur la partie du filtre agencée dans ce volume est toutefois très bonne.

Selon une caractéristique, la réglette est pourvue d'un organe de manoeuvre qui facilite sa préhension par un usager. Ceci permet de déplacer la réglette dans différentes positions stables par rapport à la cafetière lorsque ladite réglette est attelée à la cafetière ou, lorsque la réglette est entièrement amovible par rapport à la cafetière, de simplement positionner la réglette à l'intérieur du filtre ou de la ranger.

Selon un mode de réalisation, la réglette est apte à être déplacée pour occuper plusieurs positions stables à l'intérieur du volume délimité par la paroi du filtre.

Ces positions correspondent pour la plupart à des positions pour lesquelles le ou les repères de la réglette vont être aptes à doser différentes quantités de café.

Par ailleurs, la réglette peut également être apte à être déplacée pour occuper plusieurs positions stables à l'extérieur du volume délimité par la paroi du filtre.

Ainsi, l'une de ces positions correspond par exemple à une position de rangement de la réglette.

Selon une caractéristique, la réglette est fixée à la cafetière par l'intermédiaire d'une articulation qui permet à cette réglette de s'écarter ou de se rapprocher de la paroi du filtre.

L'articulation forme par exemple une liaison pivotante ou une liaison rotule.

L'articulation de la réglette placée sur les parois du porte-filtre ou du panier porte-filtre, à proximité du filtre, permet à la réglette de se déplacer pour occuper plusieurs positions stables à l'intérieur du volume délimité par la paroi du filtre.

Selon une caractéristique, le mouvement de la réglette est commandé indirectement par l'usager, c'est-à-dire que ce dernier n'a pas à manipuler directement la réglette avec ses doigts.

Selon une caractéristique, les graduations sont agencées de manière à constituer une échelle de dosage unique pour le café et l'eau.

Selon une variante, la réglette est montée à coulissement sur la cafetière. Le mouvement de coulissement est par exemple effectué parallèlement à la paroi du filtre.

Ce mouvement de coulissement permet, une fois le dosage effectué, de dégager le volume du filtre lors de la percolation.

Selon une caractéristique, dans l'une des positions stables de la réglette, celle-ci est en appui contre le filtre par une extrémité qui est située à une distance du fond du filtre correspondant à une dose minimale de café.

Selon une autre caractéristique, l'extrémité de la réglette sert de repère pour indiquer, suivant sa position par rapport à la paroi du filtre dans le volume interne audit filtre, une quantité de café à doser.

En s'écartant ou en se rapprochant de la paroi du filtre, l'extrémité de la réglette permet d'indiquer suivant ses différentes positions des quantités différentes de café à doser.

La mobilité de ces réglettes articulées permet de les ranger hors du café après le dosage et pendant la percolation.

Selon un autre mode de réalisation de l'invention, la réglette est posée au moins partiellement à l'intérieur du volume délimité par la paroi du filtre, le long de celle-ci.

Ce mode de réalisation est particulièrement simple puisqu'il ne prévoit pas de mode de fixation particulier pour la mise en oeuvre de la réglette à l'intérieur du filtre, la réglette étant agencée contre la paroi dudit filtre.

Selon une caractéristique, la réglette comporte au moins une partie placée à l'intérieur du volume délimité par la paroi du filtre et qui comporte à une extrémité deux pieds d'appui ménageant entre eux une découpe pour faciliter la percolation du café.

Par ailleurs, ces deux pieds assurent la stabilité de la réglette lorsque celle-ci est posée au fond du filtre.

Selon une caractéristique, la réglette comporte à son extrémité opposée une ouverture de préhension pour le positionnement de la réglette à l'intérieur du filtre ou pour le rangement de celle-ci.

Selon une caractéristique, la réglette est apte à être rangée dans un volume de la cafetière, ce qui ne nécessite pas d'aménager un espace de rangement en dehors de cette cafetière.

La réglette entièrement amovible de ce mode de réalisation ne nécessite pas d'aménagement particulier pour sa mise en oeuvre sur les cafetières existantes.

Selon une autre caractéristique, la réglette est réalisée dans un matériau qui est au moins partiellement optiquement transparent.

Ceci permet par exemple d'obtenir une meilleure lisibilité des graduations de la réglette.

Selon encore une autre caractéristique, le dispositif de dosage comporte une partie dans laquelle sont aménagées une ou plusieurs graduations telles qu'à un repère correspond au moins une graduation, ladite partie étant réalisée dans un matériau au moins partiellement optiquement transparent.

Ceci permet d'obtenir une bonne lisibilité des graduations.

La partie du dispositif ainsi concernée peut, par exemple, être l'articulation ou le support qui permet la fixation de la réglette à la cafetière.

Selon un autre mode de réalisation, la réglette agencée le long de la paroi du filtre est réalisée dans un matériau identique à celui du filtre et est distincte de la forme tronconique dudit filtre.

Ainsi, cette configuration de réglette n'est pas de nature à modifier la fonction première du filtre en papier ou en fibres synthétiques, mais y ajoute une fonctionnalité supplémentaire.

Selon une caractéristique, la réglette est solidaire du filtre.

Il convient également de noter que la réglette peut être détachée du filtre et vendue ainsi avec le filtre aux consommateurs.

Selon une autre caractéristique, la réglette est posée au moins partiellement à l'intérieur du volume délimité par la paroi du filtre.

Ainsi, dans ce mode de réalisation, il est également possible d'envisager de déporter les graduations placées sur la réglette en dehors du volume interne au filtre.

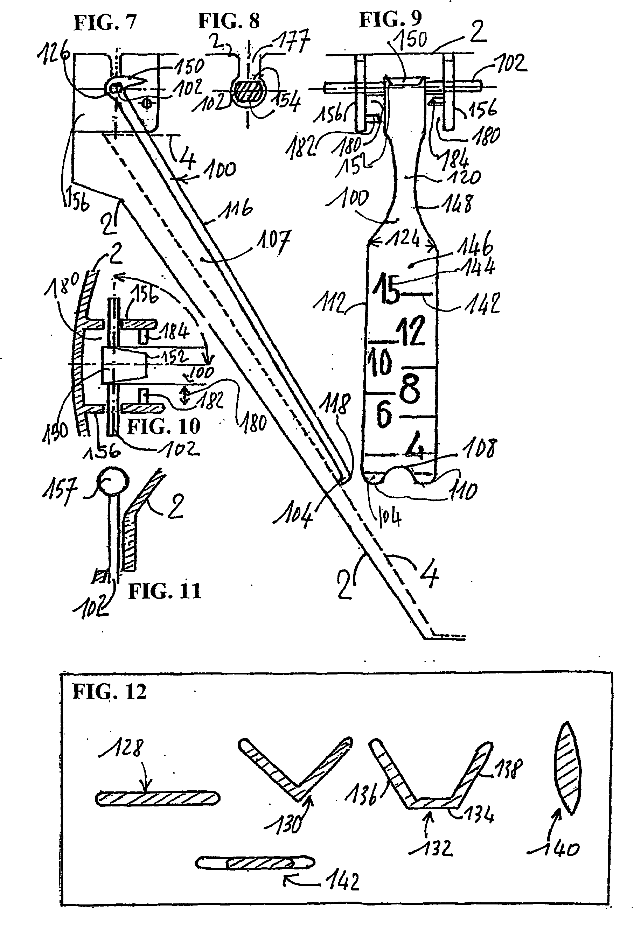

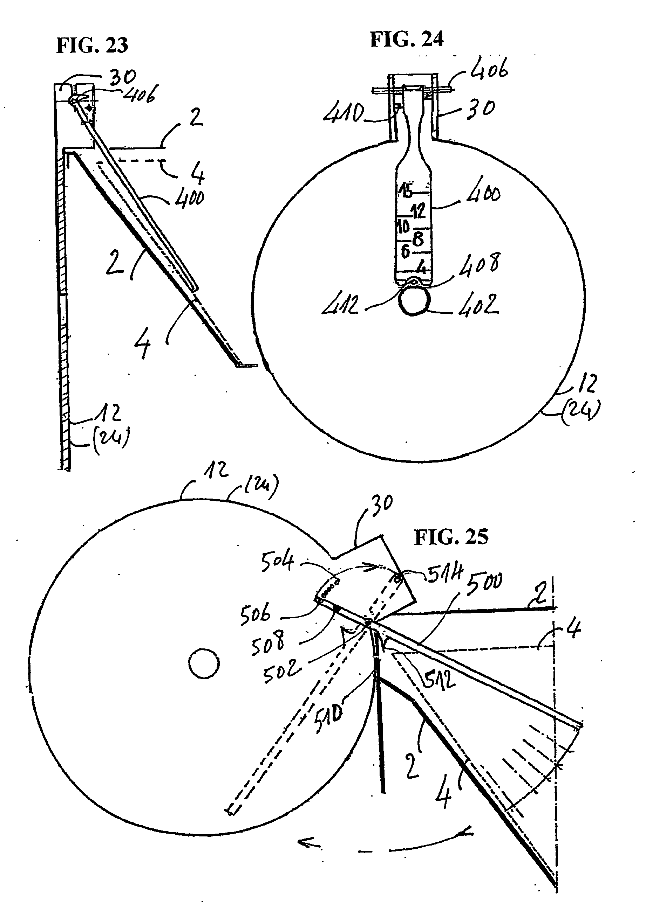

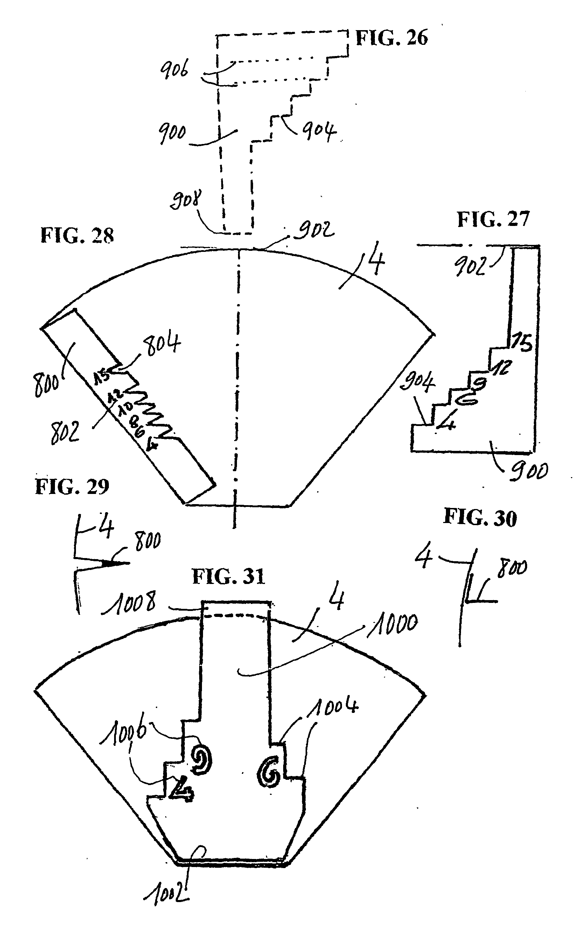

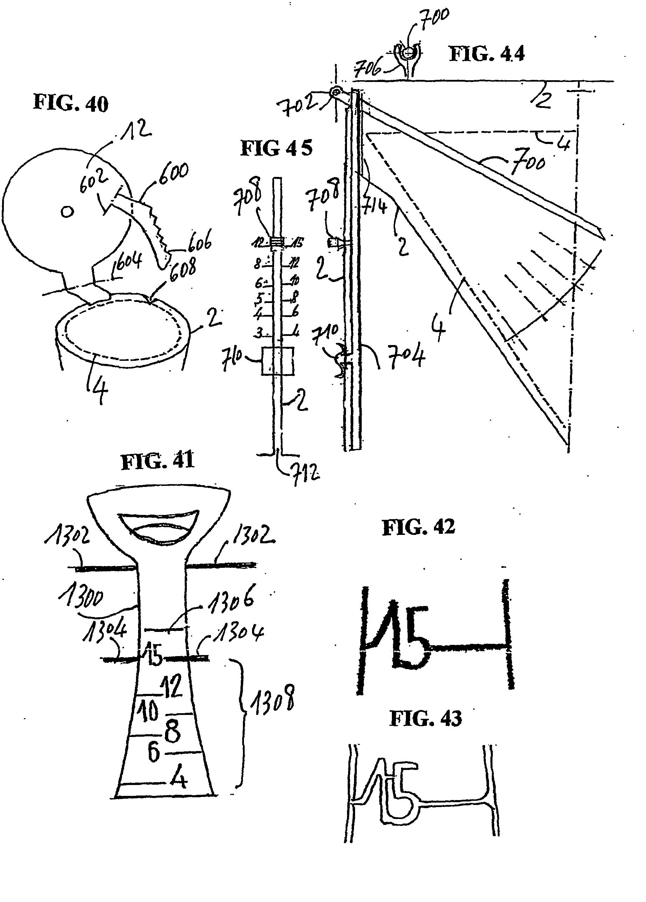

D'autres caractéristiques et avantages apparaîtront au cours de la description qui va suivre, donnée uniquement à titre d'exemple non limitatif et faite en référence aux dessins annexés, sur lesquels :
- les figures 1 et 2 illustrent deux modèles de cafetière différents ;
- les figures 3 à 6 représentent des vues en coupe verticale d'une réglette articulée selon l'invention dans quatre positions principales ;
- la figure 7 représente une vue en coupe d'une réglette 100 en position de dosage dans le filtre 4 ;
- la figure 8 est une vue schématique agrandie de l'axe d'articulation 102 représenté sur la figure 7 suivant une coupe verticale ;
- la figure 9 est une vue de face de la réglette 100 de la figure 7 ;
- la figure 10 est une vue de dessus en coupe suivant l'axe 102 de la figure 9 ;
- la figure 11 illustre une variante de l'axe d'articulation 102 en vue de dessus ;
- la figure 12 illustre différentes variantes de réalisation de sections transversales du corps d'une réglette selon l'invention ;
- les figures 13 à 16 sont des vues schématiques suivant différentes orientations d'une réglette mobile en translation par rapport à la cafetière ;
- la figure 17 est une vue d'une réglette articulée selon l'invention ;
- la figure 18 illustre des variantes de réalisation de réglettes articulées du type de celle représentée à la figure 17 ;
- les figures 19 à 22 illustrent différents types de montage par articulation d'une réglette selon l'invention ;
- les figures 23 et 24 représentent une réglette articulée sur le couvercle de la cafetière ;
- la figure 25 illustre une variante de réalisation d'une réglette articulée sur le couvercle d'une cafetière ;
- les figures 26 à 31 illustrent différentes réglettes selon l'invention du type de celles réalisées dans le même matériau que les filtres ;
- les figures 32 à 35 illustrent un type de réglette selon l'invention qui est simplement posée au fond du filtre ;
- la figure 36 représente une vue en coupe verticale d'une réglette 1200 accrochée à la cafetière au moment du dosage ;
- la figure 37 représente en vue de face la réglette de la figure 36 au moment du dosage ;
- la figure 38 illustre plusieurs variantes de réalisation d'organes d'accrochage et de manoeuvre de la réglette 1200 ;
- la figure 39 représente la réglette 1200 en vue de dessus au moment du dosage (sans les graduations) ;
- la figure 40 illustre une réglette 600 fixée au couvercle d'une cafetière ;
- la figure 41 est une vue d'une réglette positionnée le long de la paroi du filtre analogue à celle représentée sur les figures 32 à 35 ;
- les figures 42 et 43 sont des vues schématiques partielles de graduations réalisées selon deux façons différentes ;
- les figures 44 et 45 représentent une réglette articulée et commandée par une tige de manoeuvre.
   Préalablement à la description de divers modes de réalisation de l'invention, un bref exposé des principes de fonctionnement des cafetières les plus répandues va être effectué en référence aux figures 1 et 2.

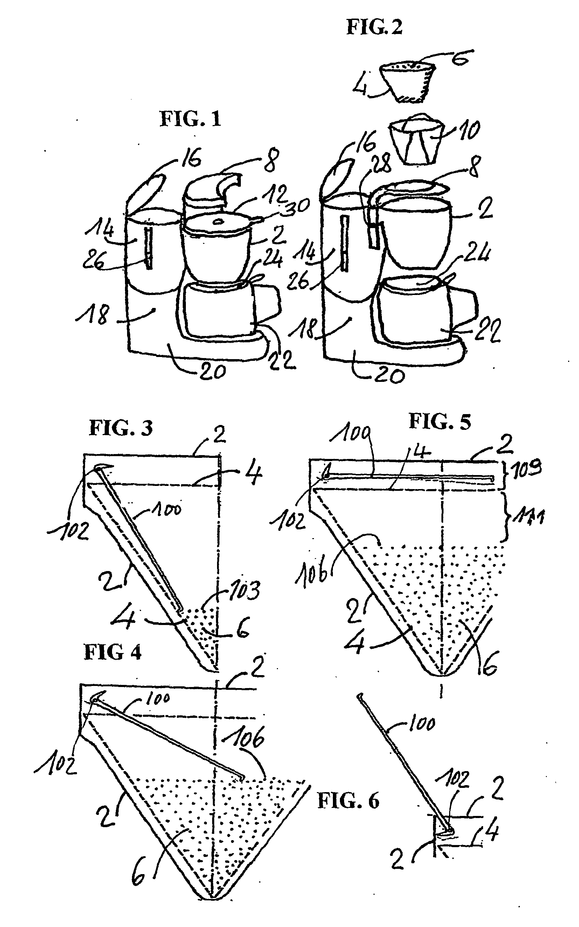

   La figure 1 représente une cafetière dont le porte-filtre 2 est posé sur la verseuse 22.
   la figure 2 représente une cafetière dont le porte-filtre 2 pivote sur le corps de la cafetière en 28. En vue éclatée sont illustrés le filtre en papier 4 et le panier à filtre 10 existant sur certains modèles de cafetières.
   Dans tous les modèles de cafetières, le porte-filtre 2 reçoit le filtre 4, dans lequel le café 6 est déversé. Certains modèles de cafetières sont équipés d'un panier porte-filtre 10 venant prendre place entre le porte-filtre 2 et le filtre 4.
   Par le capot 8 et par l'intermédiaire d'un tuyau, la vapeur d'eau est amenée.
   Sur le porte-filtre 2 un couvercle 12 est posé et comporte une queue de saisie 30.
   Un réservoir à eau 14 doté d'un couvercle 16 est soutenu par le corps de la cafetière 18 qui est solidaire du socle 20.
   La verseuse 22 est fermée par le couvercle 24.
   Le niveau de remplissage en eau dans le réservoir 14 est indiqué au travers de la fenêtre transparente graduée 26.
   Les numéros de référence indiqués sur les figures 1 et 2 seront utilisés tout au cours de l'exposé de l'invention.
   Selon un premier mode de réalisation, les réglettes ont un ou plusieurs points d'attache à la cafetière, elles évoluent dans l'espace et au moment du dosage du café elles prennent position pour partie dans le filtre où doit être déversé le café, pour ensuite y rester pendant la percolation ou se ranger ailleurs, suivant le choix du consommateur. Elles comportent une ou plusieurs graduations sur leur partie plongée dans le filtre, ou bien ces graduations sont déportées hors de ce volume.
   Les figures 3 à 25, 40, 44 et 45 illustrent des modes de réalisation de réglettes articulées et, plus généralement, de réglettes aptes à être déplacées pour occuper plusieurs positions stables à l'intérieur et à l'extérieur du filtre.
   Sur la figure 3 la réglette 100 articulée sur l'axe 102 est rabattue dans le filtre 4. Le niveau de remplissage minimum de café est indiqué par la référence 103.
   Sur la figure 4 la réglette 100 est dans une position correspondant au niveau de remplissage maximum en café indiqué par la référence 106.
   Sur la figure 5 la réglette 100 est rangée dans le volume 109 compris entre le plan supérieur de remplissage en café 106 et le couvercle 12. Un volume inférieur 111 est destiné à l'expansion du café pendant la percolation du café.
   Sur la figure 6 la réglette 100 est basculée vers l'extérieur du porte-filtre 2 afin de vider le filtre et le café du porte-filtre. Cette position correspond aussi au cas du porte-filtre renversé dans un lave-vaisselle.
   Comme représenté aux figures 7 et 9, à la base de la réglette, des retours 104 prenant appui sur le filtre écartent la réglette 100 dudit filtre 4, définissant ainsi un espace 107 entre le filtre et cette dernière en vue de faciliter la percolation le long du filtre.
   Une découpe 108 pratiquée entre les retours 104 (figure 9) facilite également la percolation.
   Les deux retours 104 confèrent également à la réglette une stabilité de positionnement le long du filtre.
   Les formes sensiblement arrondies 110 des retours 104 évitent l'endommagement du filtre. Suivant une variante non représentée, le corps 100 peut être ajouré ce qui facilite encore la percolation.
   Dans la position stable représentée sur la figure 3 ou 7, la réglette est en appui contre le filtre par son extrémité où sont aménagés les retours 104. Dans cette position, l'extrémité libre de la réglette est située à une distance du fond du filtre correspondant à une dose minimale de café. D'autres positions stables telles que celles représentées sur le figures 3 à 6 sont possibles selon les quantités de café souhaitées (figures 2 et 3).
   La réglette comporte une zone support des repères qui font office de graduations 112 et cette zone a, par exemple, une section entre les zones référencées 116 et 118 plus mince vers l'extrémité où sont aménagés les retours 104 afin de faciliter l'écoulement (figure 7).
   La largeur 124 de la réglette représentée à la figure 9 correspond, lorsque cette largeur est faible, à une seule échelle de graduations (ex : petites tasses).
   Le corps de réglette comporte une extrémité opposée à celle où sont pratiqués les retours 104 et qui comporte l'axe d'articulation 102.
   Cette extrémité opposée, de plus faible largeur que largeur 124 de la zone support de graduations 112, est raccordée à cette dernière par une zone formant un col 120 de largeur inférieure aux deux zones qu'elle raccorde.
   A l'extrémité opposée 126, la réglette est plus épaisse pour retenir l'axe 102.
   A titre de variantes, la figure 12 indique de façon non limitative des sections transversales de réglettes.
   La section 128 plus large que la section 124 de l'extrémité opposée 126 (figure 9) peut ainsi recevoir deux échelles de graduations pour petites et grandes tasses.
   Il en est de même avec les sections en V 130, en trapèze 132 ou oblongue et pivotée de 90° référencée 140.
   Dans la variante 132, les repères communs sont gradués sur la partie frontale 134, tandis que, par exemple, la partie latérale 136 indique les petites tasses et la partie latérale 138 les grandes tasses.
   La section indiquée par 140 est de forme elliptique et la section 142 est variable suivant la dimension longitudinale de la réglette. La réglette peut donc prendre toutes les formes géométriques possible : prisme, cylindre, cône, pyramide, sphère...
   Les graduations illustrées par les traits 142 et les chiffres 144 (figure 9) sont réalisées dans la masse du matériau constitutif de la réglette en relief ou en creux ou bien suivant une combinaison des deux en vue de créer des ombres portées et assurer ainsi une bonne lisibilité.
   Il est également possible d'utiliser les graduations (vide/plein) du type de celles représentées sur les figures 42 et 43.
   Les traits et les chiffres sont disposés en quinconce pour donner aux chiffres une hauteur maximum (meilleure lisibilité), et à titre indicatif la hauteur est d'au moins 8 mm.
   La partie de la réglette formant le col 120 ne recevant pas de graduations, peut donc avoir une largeur réduite et avoir un profil extérieur indiqué par la courbe 148, sa section non représentée pouvant être circulaire.
   A la tête de la réglette située à son extrémité opposée à la base, une languette de saisie 150 est prévue, dont la pointe 152 est effilée sur ses quatre faces afin d'en faciliter la saisie.

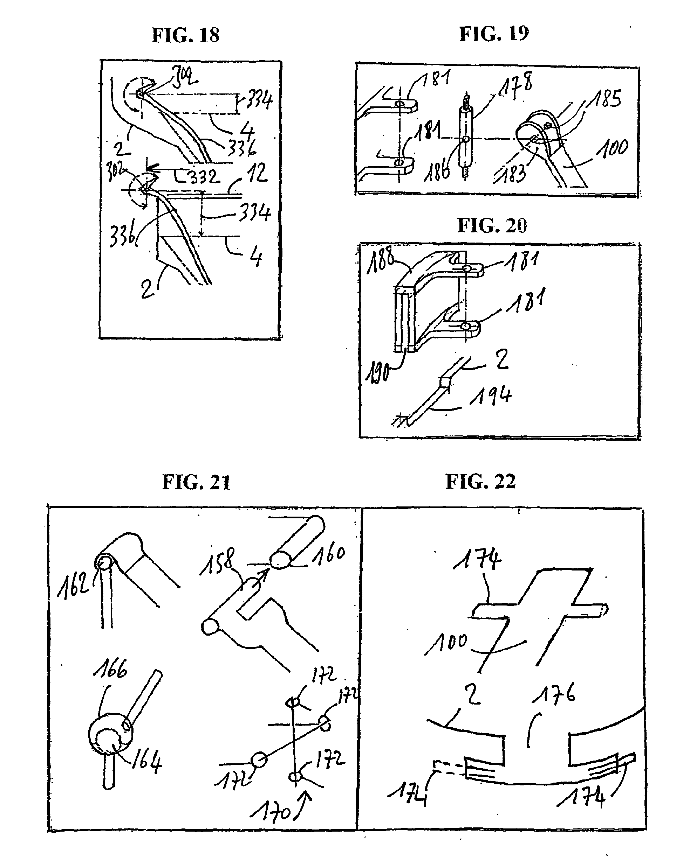

   La figure 21 représente schématiquement quelques exemples d'articulations possibles : un rouleau 162, une paumelle 158/160, un assemblage 164/166 constituée d'une rotule montée par expansion d'une partie femelle 166, une articulation 170 constituée d'un cardan complet avec quatre rotations 172, cette dernière articulation permettant de monter et de lire aisément la réglette dotée du profil 140 (figure 12).
   Avantageusement, la partie mâle 164 de l'assemblage 164/166 peut recevoir les graduations déportées et la partie femelle 166 peut être réalisée dans un matériau optiquement transparent et grossissant pour faciliter la lecture des graduations.
   Par ailleurs, on pourrait, alternativement, envisager de placer les graduations sur la partie femelle 166 de l'assemblage.
   La figure 22 est un exemple de montage de la réglette 100 sur le porte-filtre 2 au moyen d'un axe 174 venant en butée du coté extérieur ou du coté intérieur du porte-filtre 2 lorsque la réglette est descendue dans la meurtrière 176.
   L'axe 102 indiqué à la figure 8 comporte deux méplats réduisant sa largeur, ce qui permet de l'introduire dans les passages 177 des deux oreilles support 156 et de maintenir captive la réglette quand elle est dans la position de la figure 5.
   La figure 10 représente les possibilités de translation de la réglette dans les espaces 180 afin de la faire reposer sur les ergots 182 et 184.
   En appui sur l'ergot 182, la réglette est dans la position de la figure 4, ce qui correspond au dosage maximum (cafetière pleine).
   En appui sur l'ergot 184, la réglette est dans la position de la figure 5, c'est-à-dire qu'elle est rangée à l'horizontale au dessus du café.
   Sur la figure 10 l'angle entre la réglette 100 et l'axe 102 est de 90°. Toutefois, on pourrait envisager une réduction de cet angle dans le plan de la figure 10. Ceci permettrait à la réglette de dégager le centre du filtre et ainsi de ne pas faire obstacle à la chute de la vapeur d'eau dans le filtre.
   La figure 11 est une variante de réalisation de l'axe 102 qui est prolongé à l'extérieur du porte-filtre 2 et est équipé d'une boule 157 (organe de manoeuvre) permettant de manoeuvrer la réglette 100.
   Dans ce cas, la réglette n'a pas de languette de saisie 150.
   Cette dernière disposition permet aussi, en variante, de supprimer les oreilles support 156 et d'articuler la réglette suivant la corde du cercle du bord supérieur du porte-filtre.
   La figure 19 représente une variante d'articulation autour d'un axe pivot vertical 178 emboîté sur les bras supports 181, la réglette 100 est montée sur l'axe pivot 178 par l'intermédiaire d'un étrier 183 et des ergots 185 engagés dans l'ouverture 186.
   En variante (Figure 20), les bras supports 181 peuvent se monter sur la pièce 188 dont la fente 190 permet l'emboîtement dans l'encoche 194 du porte-filtre 2. Ainsi, l'articulation est détachable de la cafetière et peut se monter sur les cafetières existantes.
   Les différents types de réglettes articulées qui viennent d'être décrits peuvent, grâce à leur articulation de type liaison pivotante ou liaison rotule, voire d'un autre type, s'écarter ou se rapprocher de la paroi du filtre.

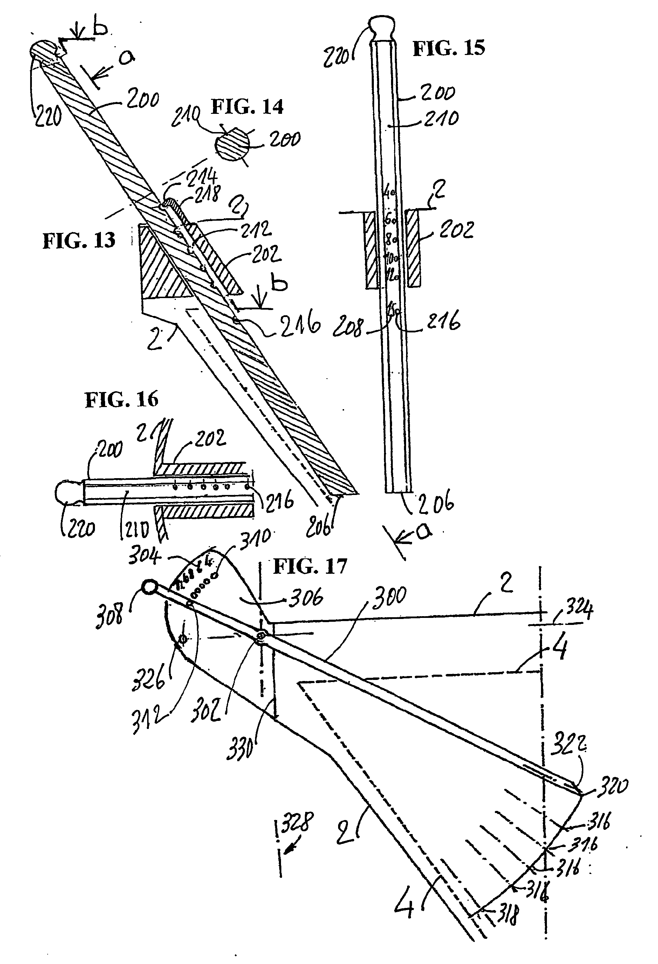

   Les figures 13, 14, 15 et 16 représentent une réglette 200 mobile en translation avec une ou plusieurs graduations déportées à l'extérieur du volume du filtre destiné a recevoir le café.
   Cette réglette est apte à se déplacer pour occuper plusieurs positions stables à l'intérieur du volume interne délimité par la paroi périphérique qui donne au filtre sa forme tronconique (volume du filtre pour recevoir le café).
   Comme représenté sur les figures 3, 4 et 7, l'extrémité de la réglette sert de repère pour indiquer, suivant sa position par rapport à la paroi du filtre dans son volume interne, une quantité de café à doser.
   La figure 13 est une coupe longitudinale de la réglette 200, coulissant dans un support 202 parallèlement à la paroi du filtre.
   La figure 15 montre en coupe a-a la réglette munie de graduations 208.
   La figure 16 montre en coupe b-b la réglette 200. Avec cette réglette, le niveau de dosage en café dans le filtre est donné par l'extrémité 206 de la réglette.
   Toute l'échelle des graduations est translatée vers le haut, les chiffres 208 matérialisant en partie les graduations étant indiqués sur un méplat 210 de la réglette. La figure 14 donne l'allure de la section transversale de la réglette avec son méplat 210.
   Ce méplat 210 coulisse le long d'une partie plate 212 du support 202, ce qui empêche la réglette de tourner durant sa course. La réglette est bloquée par un ergot 214 qui s'enclenche dans des cuvettes de graduations 216 sous l'effet de la tige flexible 218 comportant l'ergot. La réglette est manoeuvrée par une boule 220 (organe de manoeuvre) disposée à son extrémité opposée, à l'extrémité 206.
   Ce type de réglette peut être aussi installé sur le capot 8, le réservoir 14, le corps 18 ou le pivot 28 des cafetières.
   La figure 17 illustre un type de réglette 300 articulée dans la zone 302 sur le porte-filtre 2, avec les chiffres de graduations 304 déportés sur l'oreille support 306. Cette oreille et la réglette peuvent être en matériau transparent pour faciliter la lecture des graduations et le remplissage en café à la dose souhaitée.
   La réglette 300 manoeuvrée par une boule située à une extrémité 308 tourne autour de l'axe 302, et se bloque au droit des graduations 304 dans les cuvettes 310 au moyen d'un ergot 312 (identique à l'ergot 214 sur la figure 13) placé sur la réglette.
   L'extrémité opposée de la réglette prend ainsi toutes les positions stables souhaitées 316 entre la position minimale 318 et la position maximale 320.
   La lecture du niveau sur l'extrémité opposée amincie confère une grande précision de dosage.
   En position de rangement et pendant la percolation, la réglette s'immobilise dans la position indiquée par le trait 324, lorsque l'ergot 312 est dans la cuvette 326.
   La boule 308 est ramenée en position 328 pendant la mise en place du filtre vide ou pendant son retrait lorsqu'il est plein et dans le lave-vaisselle.
   La paroi 330 du porte-filtre impose de placer l'oreille 306 à l'extérieur du porte-filtre 2.
   La position de l'axe 302 (ainsi que de l'axe 102) est adaptable dans les directions 332 et 334 (figure 18). Dans ce cas, les réglettes 200 et 300 possèdent chacune une portion courbe 336.
   Comme illustré sur les figures 23 et 24, une réglette articulée 400 peut s'installer sur le couvercle amovible 12 du porte-filtre ou sur le couvercle 24 de la verseuse.
   Dans ce cas la réglette 400 a deux fonctions, outre une fonction de dosage, elle forme un crochet de suspension du couvercle 12 par rapport au porte-filtre 2 (figure 23). Ceci est très pratique pendant le dosage du café.
   La figure 24 est une vue de dessous du couvercle 12 montrant la réglette 400 en position repliée contre le couvercle, la queue de manutention 30 du couvercle et le trou de passage de la vapeur 402. L'ensemble constituant l'articulation de la réglette (suivant les mêmes principes que la réglette 100) est placé dans la queue 30 qui fait saillie par rapport au contour du couvercle pour recevoir l'extrémité de la réglette et son axe d'articulation 406 de façon à ce que l'extrémité opposée 408 de la réglette dégage le passage de la vapeur 402.
   Selon une variante non représentée, l'axe d'articulation 406 n'est pas orthogonal avec l'axe de la réglette. La réglette se bloque sur l'ergot 410 ou bien en variante, elle est bloquée par le téton 412.
   La figure 25 illustre l'adaptation d'une réglette 500 sur le couvercle 12 ou 24. Cette réglette 500 agencée sous la face interne du couvercle 12 est articulée dans la partie 502 par une liaison de type rotule, bloquée sur les cuvettes 504 et l'ergot 506 et manoeuvrée par la boule 508 dans une position correspondant au dosage souhaité.
   Comme représenté sur la figure 25, le couvercle 12 est en butée contre le porte-filtre 2 dans la partie référencée 510.
   Par ailleurs, la réglette est pourvue d'une cale 512, par exemple réalisée sous la forme d'un bec, qui, en fin de course de la réglette vient en butée contre la paroi du porte-filtre 2 du côté opposé à la partie référencée 510.
   En position de rangement, l'ergot 506 est amené dans la partie 514.
   La figure 40 montre une réglette 600 montée sur la face de dessous du couvercle 12 par une articulation 602. Le couvercle 12 est également articulé dans une zone 604 sur le porte-filtre 2. L'agencement des graduations en escalier 606 de la réglette assure deux fonctions : il donne le niveau de dosage souhaité par chaque marche graduée de l'escalier et il cale le couvercle lorsque l'une des marches de l'escalier est engagée dans l'encoche 608 qui est judicieusement positionnée sur le bord supérieur du porte-filtre 2.
   Les figures 44 et 45 illustrent une réglette 700 articulée en 702 et commandée par une tige de manoeuvre 704, par l'intermédiaire d'un étrier de maintien captif 706. Un curseur de niveau et de tirage 708 glisse dans une fente 712 du porte-filtre 2. La tige 704 est arrêtée dans la position désirée par le curseur à ailes élastiques 710.
   Selon une variante non représentée, l'étrier 706 est remplacé par le cardan 170 de la figure 21. Ceci permet de déporter la commande et les graduations sur le capot 8, le corps 18, le socle 20, le réservoir 14 ou le pivot 28 de la cafetière.
   Lorsque les graduations sont déportées sur le porte-filtre, elles peuvent être communes avec celles de l'eau, ce qui constitue le mode de réalisation le plus élaboré de l'invention.
   Selon une variante non représentée, la tige, ses curseurs et la graduation linéaire peuvent être remplacés par une crémaillère commandée par un bouton à engrenage et une graduation circulaire.
   Selon un deuxième mode de réalisation, les réglettes illustrées sur les figures 26 à 31 et agencées, en position de dosage, le long de la paroi du filtre sont réalisées dans le même matériau que les filtres et donc consommables et jetables avec les filtres.
   Ces réglettes sont distinctes de la forme tronconique conférée par la paroi périphérique du filtre, ceci afin de ne pas modifier la fonction de filtrage du filtre.
   La réglette 800 de la figure 28 est intégrée au filtre 4, soit par les plis du filtre de la figure 29, soit par la pièce sertie à sec de la figure 30 (équerre).
   Les graduations sont constituées par des encoches 804.
   La réglette 900 des figures 26 et 27 est attachée au filtre 4 soit par la continuité de la matière suivant une ligne de pliage 902, soit par sertissage à sec.
   Dans la figure 26, la réglette est dépliée à l'extérieur du filtre 4.
   Dans la figure 27, la réglette est en position de lecture à l'intérieur du filtre au moment du dosage et ses niveaux de graduations sont matérialisés par des marches d'escalier 904.
   A titre de variante, la réglette 900 est pliée suivant les pointillés 906 indiqués sur la figure 26 avant ou après avoir été détachée du filtre.
   La réglette une fois pliée est placée à cheval sur le bord supérieur du filtre ou du porte-filtre de manière à ce que, d'une part, le repère fourni par l'extrémité inférieure 908 de la réglette soit placée à l'intérieur du filtre et sensiblement dirigée vers le fond de ce dernier, indiquant ainsi le niveau de dosage en café à atteindre et, d'autre part, la partie pliée suivant les pointillés 906 soit placée à l'extérieur du filtre pour permettre la lecture des graduations déportées figurant sur cette partie et qui correspondent à la dose de café indiquée par le repère fourni par l'extrémité inférieure 908.
   La figure 31 représente une réglette 1000 amovible, constituée du même matériau que le filtre et posée au fond de ce dernier. La largeur du pied de réglette 1002 est inférieure à la largeur du fond du filtre.
   Les niveaux de dosage 1004 sont matérialisés par des marches d'escalier placées en quinconce sur les deux bords latéraux de la réglette (forme de pyramide), avec un large espace qui reçoit les graduations traversant toute l'épaisseur de la réglette comme détaillé à la figure 43.
   Ceci fournit une bonne lisibilité des graduations. La réglette 1000 dépasse le haut du filtre 4 par une languette de préhension 1008 (organe de manoeuvre).
   A titre de variante non représentée, la réglette 1000 est pliable comme la réglette 900.
   Ce type de réglette est adapté à recevoir des éléments de communication et de publicité pour des cafés produits par les torréfacteurs.
   Dans le mode de réalisation qui vient d'être décrit, la réglette en papier ou en fibres synthétiques peut être utilisée dans une position stable pour le dosage du café soit en étant solidaire du filtre, soit en étant amovible par rapport à celui-ci. Dans ce dernier cas, la réglette peut être simplement posée au fond du filtre, en étant en appui contre la paroi, ou bien agencée à cheval sur le rebord du filtre ou du porte-filtre.
   Selon un troisième mode de réalisation, d'autres types de réglettes amovibles sont simplement posées au fond du filtre ou bien sur le filtre, le porte-filtre ou, plus généralement, la cafetière pendant le dosage, tout en étant agencées le long de la paroi du filtre. Elles peuvent avoir un système d'attache utilisé en position de rangement, en dehors du dosage.

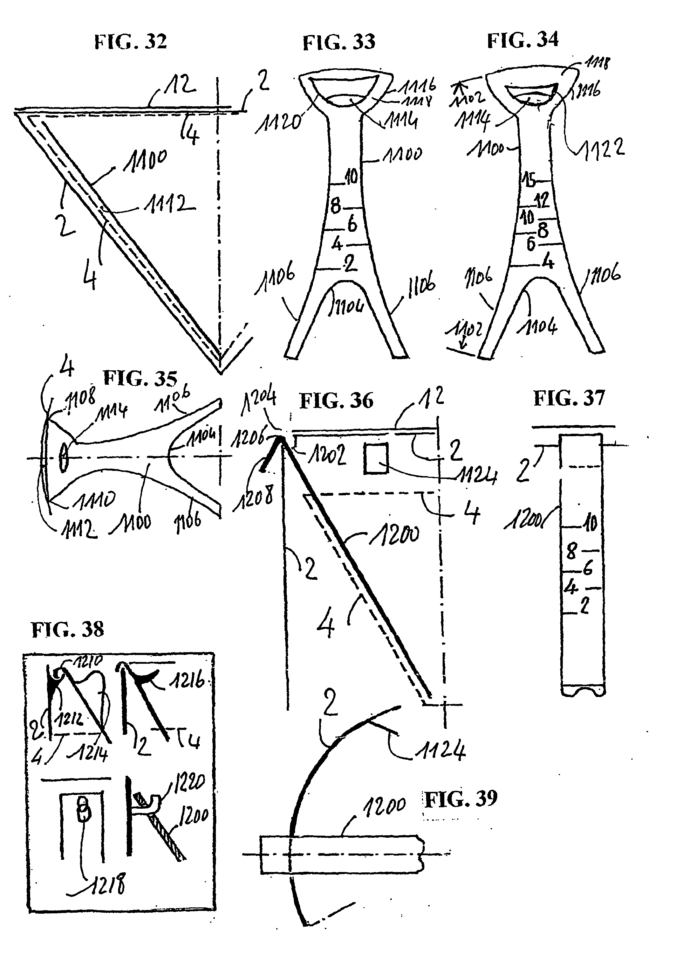

   Les figures 32 à 35 et 41 illustrent différents types de réglettes disposées au fond du filtre.
   La figure 32 représente une réglette 1100 posée au fond du filtre 2 pour le dosage, le long de la paroi périphérique de ce dernier et en contact avec celle-ci.
   Les figures 33 et 34 représentent respectivement les deux faces de la réglette 1100, l'une avec des graduations pour dix grandes tasses et l'autre avec des graduations pour quinze petites tasses.
   On dispose ainsi de deux échelles différentes sur la même réglette.
   La figure 35 représente la réglette 1100 posée en vue de dessus (sans ses graduations) au moment du dosage.
   En référence à ces dessins, la réglette 1100 a une hauteur qui lui permet de se loger dans le volume du porte-filtre 2 équipé de son couvercle 12, ou bien dans le volume du porte-filtre fermé quand celui-ci est pivotant.
   Les contours hauts et bas de la réglette 1100 s'inscrivent dans un cercle 1102 (partiellement représenté sur la figure 34) d'un diamètre inférieur à celui du filtre ouvert dans le porte-filtre. Cette caractéristique permet de poser la réglette à plat à l'intérieur du filtre dans le volume compris entre le niveau supérieur du café après expansion et le couvercle 12.
   A sa partie inférieure, la réglette a une forme évasée et possède une découpe 1104 destinée à faciliter l'écoulement de l'eau de percolation en direction du fond du filtre.
   De part et d'autre de cette découpe, deux pieds d'appui 1106 assurent la stabilité de la réglette.
   La largeur hors tout de la réglette à la base des deux pieds correspond à la longueur du pli du fond du filtre diminué de quelques millimètres.
   Ainsi, quand la réglette tombe au fond du filtre, elle est instantanément centrée, puis elle bascule contre la paroi inclinée du filtre.
   A sa partie supérieure, la réglette 1100, compte tenu de sa largeur, s'appuie en deux points distants 1108 et 1110 du filtre (figure 35) créant ainsi l'espace libre 1112 entre le filtre 4 et la réglette.
   La réglette 1100 est pourvue d'une ouverture 1114 qui facilite sa préhension ou sa manoeuvre. Cette ouverture peut symboliser un grain de café et le contour extérieur profilé 1116 de la partie supérieure de la réglette peut représenter un bol.
   Sur la figure 33, une grande tasse 1120 est représentée de manière schématique tandis qu'en figure 34 la forme 1122 représente une petite tasse.
   Entre la partie supérieure et les pieds, le corps de la réglette reçoit les graduations et peut adopter une section transversale rectangulaire ou bien légèrement bombée, ses bords étant arrondis.
   Les graduations peuvent être agencées sur une face pour les grandes tasses (figure 33) et sur l'autre face pour les petites tasses (figure 34). Placées en quinconce, les graduations ont une hauteur maximum et sont facilement lisibles.
   Dans le cas où les graduations sont agencées sur une seule face de la réglette, celle-ci peut avoir une section identique à celle de la figure 12 pour les réglettes articulées.
   Les graduations réalisées dans la masse de la matière constitutive de la réglette peuvent être une combinaison de reliefs et de creux qui en augmentent la lisibilité en ombre portée. Elles peuvent être conformes à la représentation de la figure 42 et ainsi réalisées avec la matière de la réglette : dans ce cas, elles constituent la totalité de la réglette, le reste de la matière ayant été enlevé à part les contours de la réglette ajourée. Le matériau constitutif de la réglette de la figure 42 est conformé de manière à présenter une section transversale par exemple circulaire ou polygonale. Elles peuvent également être entièrement découpées dans toute l'épaisseur de la matière de la réglette comme indiqué sur la figure 43.
   Par contraste, la lecture des graduations des figures 42 et 43 est facilitée.
   La réglette peut se ranger à plat au-dessus du café en prenant appui sur le rebord périphérique du filtre ou du porte-filtre ou bien encore sur le ou les supports 1124 placés sur le porte-filtre 2 selon les figures 36 et 39.
   Au moyen de la fente ou meurtrière 176 aménagée sur le porte-filtre 2 comme représenté sur la figure 22, la réglette peut se maintenir sur le rebord du porte-filtre à l'intérieur ou à l'extérieur de celui-ci.
   Selon des variantes non représentées, la réglette peut se ranger sous les couvercles 12 ou 24 à l'aide de crochets, ergots ou fentes.
   La réglette peut également se loger dans le volume compris entre les parois inclinées et verticales du porte-filtre, dans l'espace du réservoir à eau, sous le couvercle du réservoir à eau ou dans le socle de cafetière.
   L'ouverture 1114 de la réglette permet de suspendre la réglette.
   Les extrémités arrondies des deux pieds inscrites dans le cercle 1102 facilitent l'introduction de la réglette et son rangement dans le paquet de café.
   Les réglettes amovibles peuvent aussi être accrochées à la cafetière : elles bénéficient d'un système d'accrochage utilisé pendant le dosage et qui est aussi utilisable dans la position de rangement, hors dosage.
   Toutefois, ce système d'accrochage est très simple de manière à ne pas remettre en cause le caractère amovible de la réglette.
   Les figures 36, 37, 38 et 39 illustrent des modes de réalisation de réglettes accrochées à la cafetière.
   En référence à ces figures, la réglette 1200 est accrochée au porte-filtre 2 par un crochet 1208.
   Le porte-filtre 2 possède un orifice 1202 pour le passage du crochet 1208.
   Le couvercle 12 peut aussi comporter un orifice 1204 pour le passage du crochet 1208.
   La forme recourbée de l'extrémité 1208 (crochet) suivant une ligne de pliage 1206 peut être obtenue lors de la fabrication de la réglette ou ultérieurement et elle est alors conformée par l'utilisateur de la réglette.
   Par le biais de ce pliage, la réglette 1200 peut présenter les mêmes caractéristiques et avantages que ceux de la réglette pliable 900 décrite ci-dessus, comme par exemple la déportation à l'extérieur du filtre sur la partie pliée des graduations de dosage.
   La figure 38 représente des variantes d'organes d'accrochage et de manoeuvre (languette de saisie) de la réglette 1200.
   Le crochet 1210 de la réglette 1200 est suspendu au crochet 1212 du porte-filtre 2, les deux crochets étant logés entièrement à l'intérieur du porte-filtre 2, tandis que la languette 1214 est située dans un plan vertical (en haut à gauche).
   La languette 1216 est logée entièrement dans le volume intérieur du porte-filtre 2 (en haut à droite).
   La réglette 1200 est pourvue d'un orifice 1218 lui permettant d'être suspendue au crochet 1220 du porte-filtre 2 (en bas).
   Comme représenté sur la figure 41, une réglette mobile 1300 possède deux bras cylindriques 1302 de longueur variable permettant à la réglette de se placer au dessus du café en prenant appui dans des gorges (non représentées) aménagées sur le bord supérieur du porte-filtre.
   La réglette 1300 possède un marquage du dosage en café couramment utilisé qui est matérialisé par deux cylindres 1304 distinguant ce niveau de dosage de manière particulière.
   Un repère 1306 disposé au-dessus du marquage 1304 indique un niveau maximum de café à doser (café fort).
   Par ailleurs, on peut envisager une réglette simplifiée ne comportant qu'un ou deux repères (la partie 1308 est ainsi supprimée) correspondant chacun à une graduation, l'une pour un dosage en café couramment utilisé et l'autre pour un dosage maximum en café.
   La réglette 1300 peut comporter une seule graduation et on peut ainsi disposer de plusieurs réglettes correspondant chacune à un niveau pour remplacer la réglette unique à plusieurs niveaux.

## Revendications

1. Dispositif de dosage du café en poudre dans une cafetière à filtre tronconique en papier ou en fibres synthétiques, **caractérisé en ce qu'**il comprend au moins une réglette (100 ; 200 ; 300 ; 400 ; 500 ; 600 ; 700 ; 800 ; 900 ; 1000 ; 1100 ; 1200 ; 1300) qui comporte au moins un repère apte à doser une quantité de café lorsque ledit repère de la réglette est disposé à l'intérieur d'un volume délimité par une paroi du filtre, la réglette étant agencée le long de la paroi du filtre lors du dosage d'au moins une quantité de café.

2. Dispositif selon la revendication 1, **caractérisé en ce qu'**à un repère correspond au moins une graduation.

3. Dispositif selon la revendication 2, **caractérisé en ce que** les graduations sont agencées suivant plusieurs échelles de dosage.

4. Dispositif selon la revendication 3, **caractérisé en ce que** les graduations sont agencées sur deux faces opposées de la réglette.

5. Dispositif selon l'une des revendications 2 à 4, **caractérisé en ce** les graduations sont réalisées sous la forme de découpes dans le matériau constituant la réglette.

6. Dispositif selon l'une des revendications 2 à 4, **caractérisé en ce que** la réglette est ajourée de manière à faire apparaître par contraste les graduations en matériau plein.

7. Dispositif selon l'une des revendications 2 à 4, **caractérisé en ce que** les graduations sont agencées en quinconce sur une face de la réglette.

8. Dispositif selon l'une des revendications 2 à 7, **caractérisé en ce que** la ou les graduations sont agencées dans le volume délimité par la paroi du filtre lors du dosage.

9. Dispositif selon l'une des revendications 2 à 7, **caractérisé en ce que** la ou les graduations sont agencées au moins en partie à l'extérieur du volume délimité par la paroi du filtre lors du dosage.

10. Dispositif selon l'une des revendications 1 à 9, **caractérisé en ce que** la réglette est pourvue d'un organe de manoeuvre.

11. Dispositif selon l'une des revendications 1 à 10, **caractérisé en ce que** la réglette est apte à être déplacée pour occuper plusieurs positions stables à l'intérieur du volume délimité par la paroi du filtre.

12. Dispositif selon la revendication 11, **caractérisé en ce que** la réglette est également apte à être déplacée pour occuper plusieurs positions stables à l'extérieur du volume délimité par la paroi du filtre.

13. Dispositif selon la revendication 11 ou 12, **caractérisé en ce que** la réglette est fixée à la cafetière par l'intermédiaire d'une articulation qui permet à la réglette de s'écarter ou de se rapprocher de la paroi du filtre.

14. Dispositif selon la revendication 13, **caractérisé en ce que** l'articulation forme une liaison pivotante.

15. Dispositif selon la revendication 13, **caractérisé en ce que** l'articulation forme une liaison rotule.

16. Dispositif selon l'une des revendications 13 à 15, **caractérisé en ce que** le mouvement de la réglette est commandé indirectement par l'usager.

17. Dispositif selon l'une des revendications 13 à 16, **caractérisé en ce que** les graduations sont agencées de manière à constituer une échelle de dosage unique pour le café et l'eau.

18. Dispositif selon la revendication 11 ou 12, **caractérisé en ce que** la réglette est montée à coulissement sur la cafetière.

19. Dispositif selon l'une des revendications 11 à 18, **caractérisé en ce que**, dans l'une des positions stables, la réglette est en appui contre le filtre par une extrémité qui est située à une distance du fond du filtre correspondant à une dose minimale de café.

20. Dispositif selon la revendication 19, **caractérisé en ce que** l'extrémité de la réglette sert de repère pour indiquer, suivant sa position par rapport à la paroi du filtre dans le volume interne audit filtre, une quantité de café à doser.

21. Dispositif selon l'une des revendications 1 à 10, **caractérisé en ce que** la réglette est posée au moins partiellement à l'intérieur du volume délimité par la paroi du filtre, le long de celle-ci.

22. Dispositif selon la revendication 21, **caractérisé en ce que** la réglette comporte au moins une partie placée à l'intérieur du volume délimité par la paroi du filtre et qui comporte à une extrémité deux pieds d'appui ménageant entre eux une découpe pour faciliter la percolation du café.

23. Dispositif selon la revendication 22, **caractérisé en ce que** la réglette comporte à son extrémité opposée une ouverture de préhension.

24. Dispositif selon l'une des revendications 1 à 23, **caractérisé en ce que** la réglette est apte à être rangée dans un volume de la cafetière.

25. Dispositif selon l'une des revendications 1 à 24, **caractérisé en ce que** la réglette est réalisée dans un matériau qui est au moins partiellement optiquement transparent.

26. Dispositif selon l'une des revendications 1 à 25, **caractérisé en ce que** ledit dispositif comporte une partie dans laquelle sont aménagées une ou plusieurs graduations telles qu'à un repère correspond au moins une graduation, ladite partie étant réalisée dans un matériau au moins partiellement optiquement transparent.

27. Dispositif selon l'une des revendications 1 à 10, **caractérisé en ce que** la réglette agencée le long de la paroi du filtre est réalisée dans un matériau identique à celui du filtre et est distincte de la forme tronconique dudit filtre.

28. Dispositif selon la revendication 27, **caractérisé en ce que** la réglette est solidaire du filtre.

29. Dispositif selon la revendication 27, **caractérisé en ce que** la réglette est posée au moins partiellement à l'intérieur du volume délimité par la paroi du filtre.

## Claims

1. A device for measuring out coffee in a coffee-maker with conical paper or synthetic fiber filter, **characterized in that** it comprises at least a slide including at least a mark for measuring out an amount of coffee when said slide is arranged inside a volume defined by a wall of the filter, the slide being arranged along the wall when measuring out at least an amount of coffee.

2. Device according to claim 1, **characterized in that** to one mark there corresponds at least one graduation.

3. Device according to claim 2, **characterized in that** the graduations are arranged according to several measurement scales.

4. Device according to claim 3, **characterized in that** the graduations are arranged on the two opposite faces of the slide.

5. Device according to claims 2 to 4, **characterized in that** the graduations are embodied in the form of cut-outs from the material constituting the slide.

6. Device according to one of the claims 2 to 4, **characterized in that** the slide is pierced in such a way as to reveal in contrast the graduations in the original material.

7. Device according to one of the claims 2 to 4, **characterized in that** the graduations are staggered along one face of the slide.

8. Device according to one of the claims 2 to 7, **characterized in that** the graduation or graduations are arranged in the volume defined by the filter wall during measurement.

9. Device according to one of the claims 2 to 7, **characterized in that** the graduation or graduations are arranged at least in part outside the volume defined by the filter during measurement.

10. Device according to one of the claims 1 to 9, **characterized in that** the slide is provided with a manipulating device.

11. Device according to one of the claims 1 to 10, **characterized in that** the slide may be moved to take up several stable positions within the volume defined by the filter wall.

12. Device according to claim 11, **characterized in that** the slide may also be moved to take up several stable positions outside the filter wall.

13. Device according to claim 11 or 12, **characterized in that** the slide is secured to the coffee-maker by an articulation which enables the slide to move away from or towards the filter wall.

14. Device according to claim 13, **characterized in that** the articulation forms a pivoting linkage.

15. Device according to claim 13, **characterized in that** the articulation forms a ball-and-socket linkage.

16. Device according to one of the claims 13 to 15, **characterized in that** the movement of the slide is controlled indirectly by the user.

17. Device according to one of the claims 13 to 16, **characterized in that** the graduations are arranged to constitute a single measurement scale for the coffee and the water.

18. Device according to claim 11 or 12, **characterized in that** the slide is mounted so as to slide on the coffee-maker.

19. Device according to one of the claims 11 to 18, **characterized in that**, in one of the stable positions, the slide rests against the filter at one end which is located at a distance from the filter bottom corresponding to a minimum amount of coffee.

20. Device according to claim 19, **characterized in that** the end of the slide acts as a mark to indicate, according to its position with respect to the filter wall inside the internal volume of said filter, an amount of coffee to be measured out.

21. Device according to one of the claims 1 to 10, **characterized in that** the slide is placed at least partly within the volume defined by the filter wall, along it

22. Device according to claim 21, **characterized in that** the slide comprises at least a part placed within the volume defined by the filter wall and which comprises at one end two legs forming a cut-out between them to facilitate the percolation of coffee.

23. Device according to claim 22, **characterized in that** the slide comprises at its opposite end an aperture for grasping.

24. Device according to one of the claims 1 to 23, **characterized in that** the slide may be stowed in a volume of the coffee-maker.

25. Device according to one of the claims 1 to 24, **characterized in that** the slide is embodied in a material that is at least partially optically transparent.

26. Device according to one of the claims 1 to 25, **characterized in that** the said device comprises a part in which one or more graduations are provided such that for a mark there corresponds at least one graduation, which part is embodied in a material at least partially optically transparent.

27. Device according to one of the claims 1 to 10, **characterized in that** the slide arranged along the filter wall is embodied in a material identical to that of the filter and is distinct from the conical shape of the filter.

28. Device according to claim 27, **characterized in that** the slide is fixed firmly to the filter.

29. Device according to claim 27, **characterized in that** the slide is placed at least partly within the volume defined by the filter wall.

## Patentansprüche

1. Dosierungsvorrichtung für gemahlenen Kaffee in einer Kaffeemaschine mit kegelförmigem Filter aus Papier oder synthetischen Fasern, **dadurch gekennzeichnet, dass** sie mindestens einen Messarm umfasst, der mindestens eine zum Dosieren einer Menge Kaffee geeignete Markierung enthält, wobei besagte Markierung des Messarms innerhalb eines Raums angebracht ist, der durch eine Wand des Filters abgegrenzt ist und der Messarm entlang der Wand angeordnet ist, wenn mindestens eine Menge Kaffee dosiert wird.

2. Vorrichtung nach Anspruch 1, **dadurch gekennzeichnet, dass** einer Markierung mindestens eine Messeinheit entspricht.

3. Vorrichtung nach Anspruch 2, **dadurch gekennzeichnet, dass** die Messeinheiten gemäß mehrerer Dosierskalen angeordnet sind.

4. Vorrichtung nach Anspruch 3, **dadurch gekennzeichnet, dass** die Messeinheiten an zwei entgegen gesetzten Seiten des Messarms angeordnet sind.

5. Vorrichtung nach mindestens einem der Ansprüche 2 bis 4, **dadurch gekennzeichnet, dass** die Messeinheiten in Form von Ausschnitten aus dem Material, aus welchem der Messarm besteht, gebildet werden.

6. Vorrichtung nach mindestens einem der Ansprüche 2 bis 4, **dadurch gekennzeichnet, dass** der Messarm so durchbohrt ist, dass die Messeinheiten durch Kontrast im durchgängigen Material erscheinen.

7. Vorrichtung nach mindestens einem der Ansprüche 2 bis 4, **dadurch gekennzeichnet, dass** die Messeinheiten versetzt an einer Seite des Messarms angeordnet sind.

8. Vorrichtung nach mindestens einem der Ansprüche 2 bis 7, **dadurch gekennzeichnet, dass** die Messeinheit oder die Messeinheiten während der Dosierung in dem durch die Filterwand abgegrenzten Raum angeordnet sind.

9. Vorrichtung nach mindestens einem der Ansprüche 2 bis 7, **dadurch gekennzeichnet, dass** die Messeinheit oder die Messeinheiten während der Dosierung sich zumindest teilweise außerhalb des durch die Filterwand abgegrenzten Raums befinden.

10. Vorrichtung nach mindestens einem der Ansprüche 1 bis 9, **dadurch gekennzeichnet, dass** der Messarm mit einer Bedienungsvorrichtung ausgestattet ist.

11. Vorrichtung nach mindestens einem der Ansprüche 1 bis 10, **dadurch gekennzeichnet, dass** der Messarm bewegt werden kann, um mehrere stabile Positionen innerhalb des durch die Filterwand abgegrenzten Raums einzunehmen.

12. Vorrichtung nach Anspruch 11, **dadurch gekennzeichnet, dass** der Messarm auch bewegt werden kann, um mehrere stabile Positionen außerhalb des durch die Filterwand abgegrenzten Raums einzunehmen.

13. Vorrichtung nach Anspruch 11 oder 12, **dadurch gekennzeichnet, dass** der Messarm an der Kaffeemaschine mit einem Gelenk befestigt ist, das dem Messarm gestattet, sich von der Filterwand weg oder zu ihr hin zu bewegen.

14. Vorrichtung nach Anspruch 13, **dadurch gekennzeichnet, dass** das Gelenk eine drehbare Verbindung bildet.

15. Vorrichtung nach Anspruch 13, **dadurch gekennzeichnet, dass** das Gelenk ein Kugelgelenk bildet.

16. Vorrichtung nach mindestens einem der Ansprüche 13 bis 15, **dadurch gekennzeichnet, dass** die Bewegung des Messarms indirekt vom Benutzer gesteuert wird.

17. Vorrichtung nach mindestens einem der Ansprüche 13 bis 16, **dadurch gekennzeichnet, dass** die Messeinheiten so angeordnet sind, dass sie eine einzige Dosierskala für den Kaffee und das Wasser bilden.

18. Vorrichtung nach Anspruch 11 oder 12, **dadurch gekennzeichnet, dass** der Messarm so montiert ist, dass er über die Kaffeemaschine gleitet.

19. Vorrichtung nach mindestens einem der Ansprüche 11 bis 18, **dadurch gekennzeichnet, dass** in einer der stabilen Positionen ein Ende des Messarms am Filter aufliegt, wobei dieses sich in einem Abstand zum Boden des Filters befindet, der einer Mindestmenge Kaffee entspricht.

20. Vorrichtung nach Anspruch 19, **dadurch gekennzeichnet, dass** das Ende des Messarms als Markierung dient, um, je nach seiner Position zur Filterwand im Inneren des besagten Filters, eine zu dosierende Menge Kaffee anzuzeigen.

21. Vorrichtung nach mindestens einem der Ansprüche 1 bis 10, **dadurch gekennzeichnet, dass** der Messarm zumindest teilweise innerhalb des durch die Filterwand abgegrenzten Raums liegt, und zwar entlang der Filterwand.

22. Vorrichtung nach Anspruch 21, **dadurch gekennzeichnet, dass** der Messarm zumindest einen Teil beinhaltet, der innerhalb des durch die Filterwand abgegrenzten Raums platziert ist und der an einem Ende zwei Stützbeine enthält, die zwischen sich einen Ausschnitt zur Erleichterung der Filtration des Kaffees aufweisen.

23. Vorrichtung nach Anspruch 22, **dadurch gekennzeichnet, dass** der Messarm an seinem gegenüberliegenden Ende eine Öffnung zum Greifen enthält.

24. Vorrichtung nach mindestens einem der Ansprüche 1 bis 23, **dadurch gekennzeichnet, dass** der Messarm in einem der Innenräume der Kaffeemaschine aufgeräumt werden kann.

25. Vorrichtung nach mindestens einem der Ansprüche 1 bis 24, **dadurch gekennzeichnet, dass** der Messarm aus einem Material besteht, das zumindest teilweise durchsichtig ist.

26. Vorrichtung nach mindestens einem der Ansprüche 1 bis 25, **dadurch gekennzeichnet, dass** die besagte Vorrichtung einen Teil umfasst, in dem eine oder mehrere Messeinheiten so angebracht sind, dass einer Markierung mindestens eine Messeinheit entspricht und besagter Teil aus einem zumindest teilweise durchsichtigen Material besteht.

27. Vorrichtung nach mindestens einem der Ansprüche 1 bis 10, **dadurch gekennzeichnet, dass** der entlang der Filterwand angeordnete Messarm aus einem Material besteht, das mit jenem des Filters identisch ist und sich von der kegelförmigen Form des besagten Filters unterscheidet.

28. Vorrichtung nach Anspruch 27, **dadurch gekennzeichnet, dass** der Messarm am Filter befestigt ist.

29. Vorrichtung nach Anspruch 27, **dadurch gekennzeichnet, dass** der Messarm zumindest teilweise innerhalb des durch die Filterwand abgegrenzten Raums angebracht ist.
